# EUROPEAN PATENT APPLICATION

(11) **EP 1 955 897 A1**
(43) Date of publication of application: **13.08.2008**
(21) Application number: 08101390.6
(22) Date of filing: 07.02.2008
(51) Int. Cl.: B60R 5/04, B60R 13/01

(54) **Hinged liner for vehicle cargo area**

(30) Priority: 07.02.2007 US 888644 P
(71) Applicant: Exco Automotive Solutions Canada Inc., Dartmouth, Novia Scotia B3B 1J7 (CA)
(72) Inventor: Tarrant, Christopher Francis, Truro B2N 6R4 (CA); Hood, Keir, Halifax Nova Scotia B3L 4H6 (CA); MacAvoy, Rob, Ellershouse Nova Scotia B0N 1L0 (CA); Mladonicky, Ken, East Liberty, OH 43319 (US)
(74) Representative: Day, Caroline Margaret

(57) **Abstract**

The present invention is directed at a liner for a cargo area of a vehicle comprising a first portion; a second portion, and a living hinge, connecting the first portion and the second portion and in a same material as the first and second portions.

## Description

### CROSS-REFERENCE TO RELATED APPLICATIONS

This application claims the benefit of U.S. Provisional Application No. 60/888,644, filed February 7, 2007, which is incorporated herein by reference.

### FIELD OF THE INVENTION

This invention relates to storage solutions in vehicles, and more particularly to a hinged liner for the cargo area of a vehicle.

### BACKGROUND OF THE INVENTION

In a typical sport utility vehicle (SUV), and in many passenger cars, it is common to have rear seats with seat backs which fold down to a flat or at least relatively flat position. Many such rear seats are split, either half and half, or more commonly two-thirds one-third, so that either one or both of the seats may be folded down at any time.

When the seats are folded down, the amount of storage area available to the user is increased and allows for larger items to be stored in the vehicle storage area.

Therefore, there is provided a novel hinged liner for a vehicle storage area.

### SUMMARY OF THE INVENTION

In view of the preceding, there is a need for a foldable liner which can be used effectively in the cargo area of a vehicle where rear seats fold down.

It is desirable to have a protective liner to cover the cargo area defined by the surface behind the seats, and by the seat backs themselves when folded down.

In an aspect of the invention, there is a provided a liner for a cargo area of a vehicle comprising a first portion; a second portion, and a living hinge, connecting the first portion and the second portion and in a same material as the first and second portions.

It is particularly desirable to have a protective liner which is usable even if only one of two seat sections if folded down.

In a further aspect of the invention, a liner is provided having at least two sections, with a fold line between them, the fold line positioned to correspond with the fold line of the rear seats when the liner is installed in the cargo area. One section is configured to cover the surface behind the rear seats, and the other section is configured to cover the rear surface of the rear seats. The two sections are semi-rigid, i.e. not readily foldable by themselves, and preferably the fold line between them is a hinge. Preferably the liner is wholly or partially plastic, and the hinge is a so-called living hinge between the two sections, the living hinge being the same material as the first and second sections.

In one embodiment, to deal with the preceding scenario where both rear seat sections may be either upright or folded down, or where only one or the other is folded down, the section configured to cover the rear surface of the rear seats is split longitudinally into two subsections, the split aligning with the split between the rear seat sections.

### BRIEF DESCRIPTION OF THE DRAWINGS

Embodiments of the present invention will now be described, by way of example only, with reference to the attached Figures, wherein:

Figure 1 is a rear perspective view of a first embodiment of the invention;

Figure 2 is a rear perspective view of the Figure 1 embodiment in a folded position;

Figure 3 is a rear perspective view of the Figure 1 embodiment in an intermediate folded position;

Figure 4 is a side perspective view of the Figure 1 embodiment in the intermediate fold position;

Figure 5 is a close-up perspective view of an example of a living hinge;

Figure 6 is a perspective view showing another embodiment of the invention;

Figure 7 is a schematic diagram of the liner of Figure 6 installed to a set of rear seats.

Figure 8 is a perspective view of another example of the invention, having two lateral fold lines, and additionally two small folding side extensions;

Figure 9 is a perspective view of the Figure 8 embodiment, with the two small folding side extensions folded down;

Figure 10 is a perspective view of an embodiment similar to Figure 8, partially folded;

Figure 11 is a perspective view of the Figure 10 embodiment, showing it fully folded;

Figure 12 is a close-up perspective view of another embodiment of a living hinge for use with the liner of Figure 1; and

Figure 13 is a schematic view of a further embodiment.

### DETAILED DESCRIPTION

The invention is directed at a hinged liner for the cargo area of a vehicle. The liner comprises at least two portions which are manufactured from a material, such as thermoplastic, the two portions being attached together by a living hinge which is also manufactured from the same material as the two portions thereby resulting in a monolayer liner. In alternative embodiments, the liner is a bilaminate or a trilaminate liner.

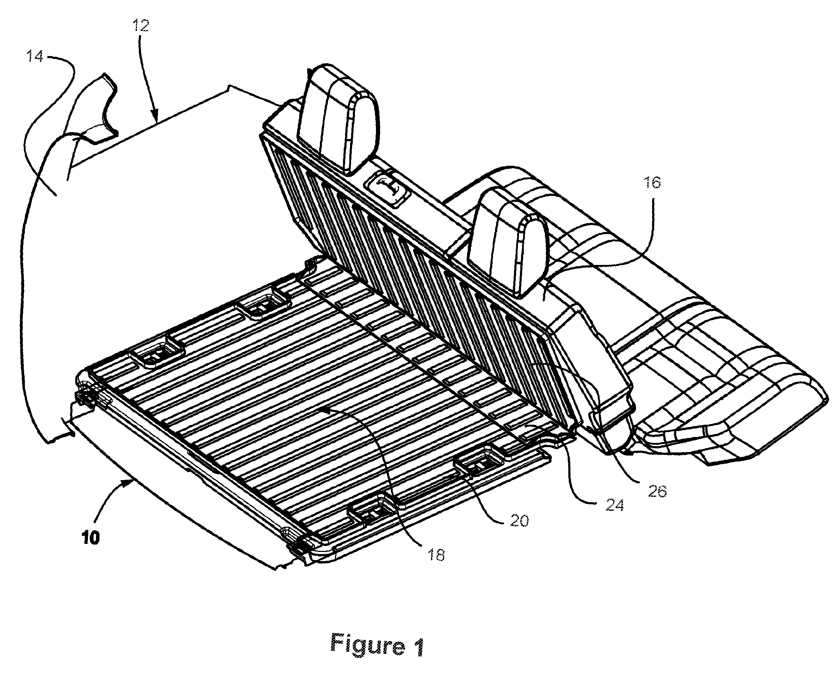

Figures 1 to 4 provide rear and side perspective views of a first embodiment of a hinged liner for a vehicle cargo area. As shown, the vehicle storage, or cargo area 10 within a vehicle 12 is defined by the walls 14 of the vehicle and the rear seats 16. Although not shown, the rear door of the vehicle defines another wall of the cargo area 10. In the current embodiment, a liner 18 is attached to a rear of the rear seats 16 to serve as a protective cover for the seats 16 and the vehicle storage area 10. The liner 18 is preferably manufactured from either thermoplastic, a combination of carpet and plastic, thermoset, and the like etc..

In the current embodiment, the liner 18 includes four (4) sections 20, 22, 24 and 26. A first portion, or the rear most portion, 20 is located on the floor of the vehicle storage area 10 to provide a protective liner to the storage area while a second, or front most, portion 26 is preferably mounted to the rear of the seats 16. The first portion 20 can either be permanently mounted to the floor or can be removably attached. The terms rear and front, when used to describe the liner, are used with reference to their location within the vehicle storage area with respect to the vehicle. The liner 18 can be mounted to the seats in any number of manners via attachment apparatus such as, but not limited to, Velcro™, detachable grommets, push pin fasteners, bungee straps and the like.

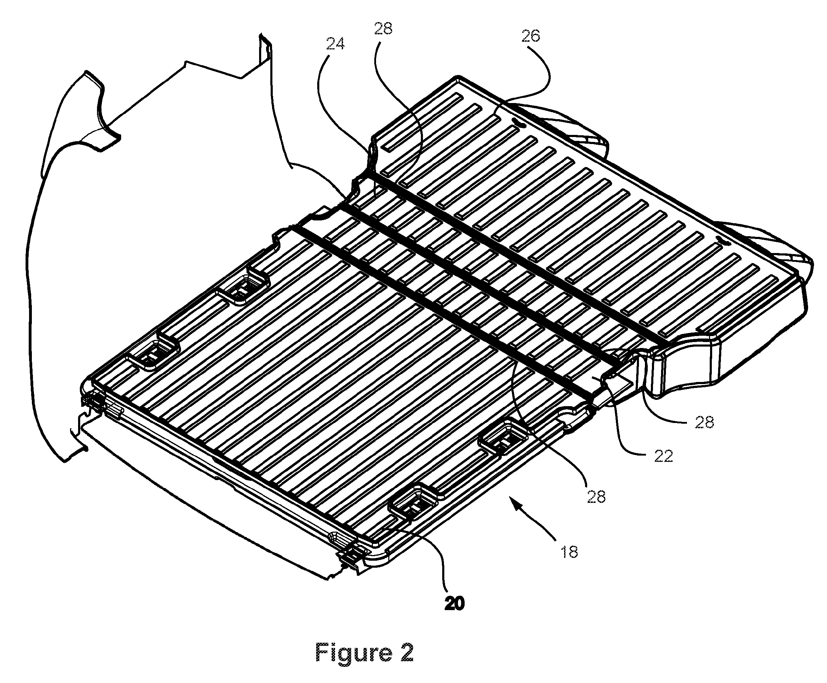

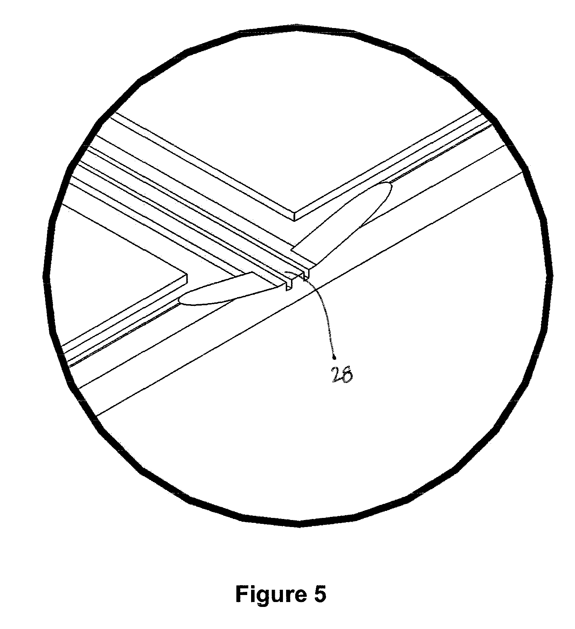

As shown in Figure 1, the rear seats 16 are in a normal, or upright, position, in which the seats 16 can be used for sitting. In Figure 2, the rear seats 16 are in a folded down position so that the entire liner 18 rests along the bottom surface of the vehicle storage area thereby providing a larger vehicle storage area for the placement of items. The liner 18 further includes a pair of intermediate portions 22 and 24. All of the portions 20, 22, 24 and 26 are manufactured from the same material. The multiple portions 20, 22, 24, and 26 are connected by integrally formed living hinges 28 which are also manufactured from the same materials as the portions of the liner 18. An example of a living hinge, which is defined as a hinge or flexure bearing with no moving parts, is shown in more detail in Figure 5.

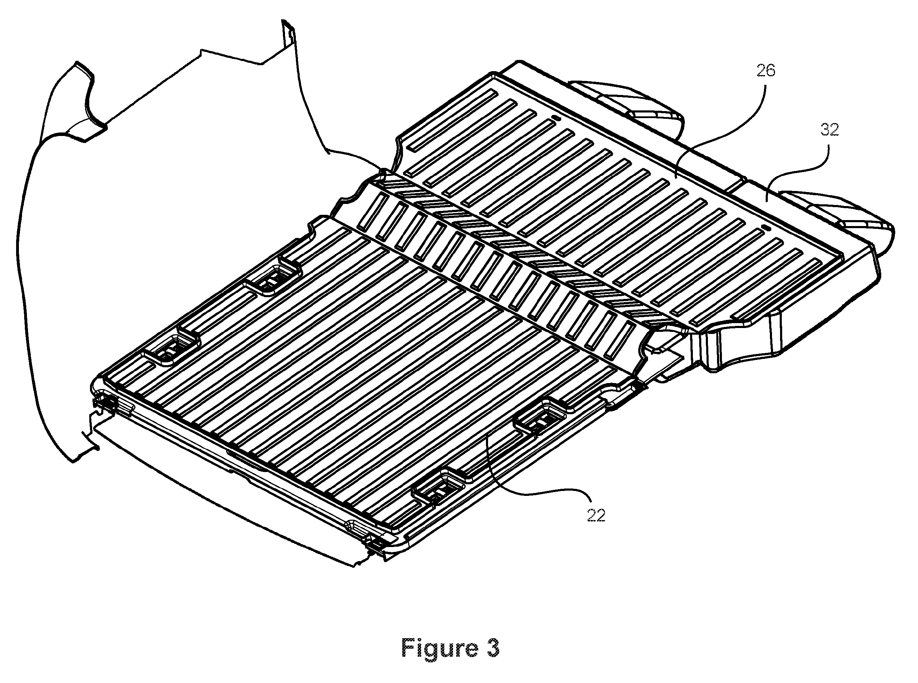

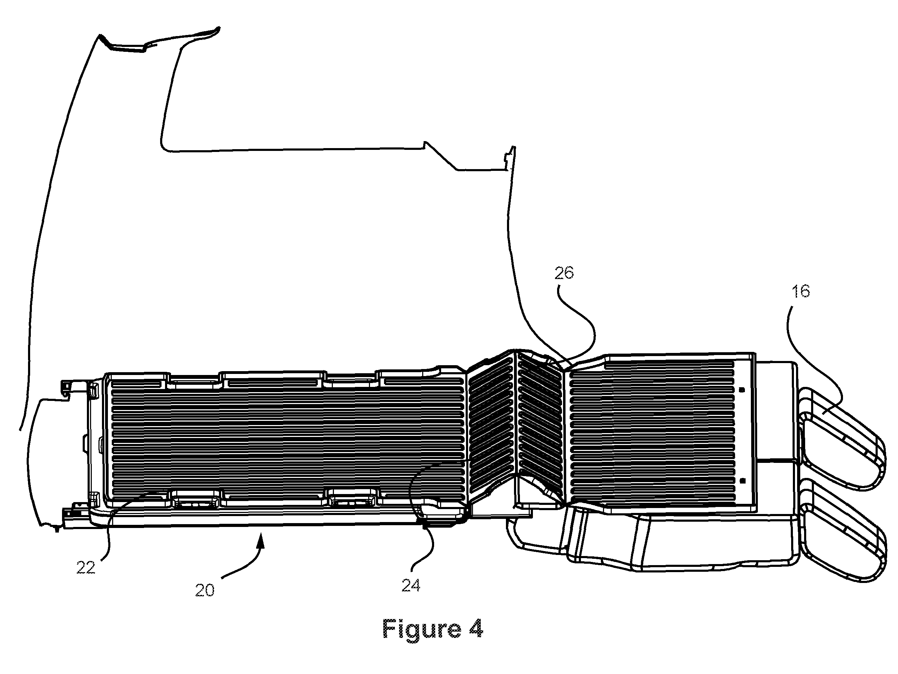

Figures 3 and 4 are rear and side perspective views, respectively, of the liner 18 in an intermediate folded position. In moving the rear seats 16 from the folded down position to the upright position, the liner 18 is bent along the living hinges 28 in order to move the intermediate portions 22 and 24 in an upward direction. When the integrally formed living hinges 28 are folded, the second portion 26 of the liner 18 slides down slightly in order to accommodate the movement of the intermediate portions 22 and 24. The rear seats 16 are then raised to the upright position, causing one intermediate portion 24 to fold over the other intermediate second portion 22 thereby resulting in the edge of the front portion 26 of the liner 18 being flush with the top of the seats 16.

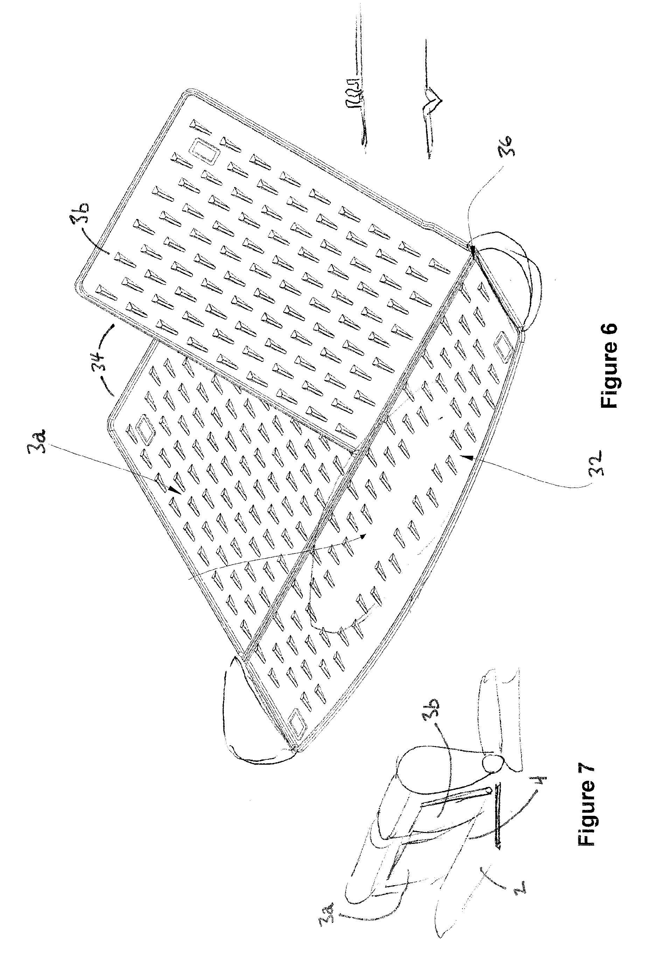

Turning to Figure 6, a second embodiment of a liner is shown, whereby a portion of the liner is split to accommodate individual rears seats. In this embodiment, the liner 30 has a first, or rear, portion 32 and a second, or front, portion 34 with a integrally formed living hinge 36, manufactured from the same material as the first and second portions, between them. In order to deal with vehicles which have separate, or individual, rear seats which can be either upright or folded down, the front portion 34 is split longitudinally into two subsections 34a and 34b, the split aligning with the split between the individual rear seat sections.

In this embodiment, the hinge 36 and resulting fold line are positioned to correspond with the fold line of the rear seats when the liner 30 is installed in the cargo area of the vehicle. The rear section 32 of the liner 30 is configured to cover the surface behind the rear seats and the front section 34 is configured to cover the rear surface of the seats. The two sections 32 and 34 are preferably semi-rigid, i.e. not readily foldable by themselves.

Figure 7 is a schematic diagram of the liner of Figure 6 installed to a set of rear seats. As shown, each of the individual front sections 34a and 34b are mounted to individual rear seats in order to accommodate the folding down of one or both seats at a time. As will be understood, the front portion of the liner can be separated into any number of sections depending on the number of individual seats available in the vehicle.

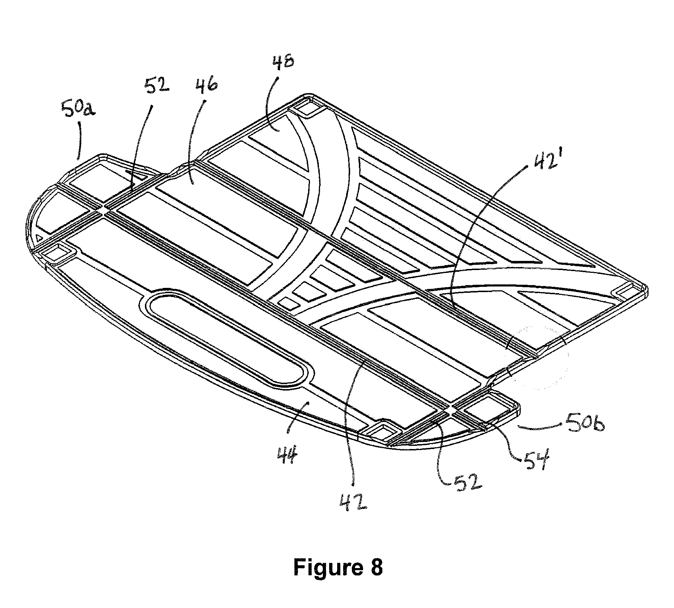

Figure 8 is a perspective view of another embodiment of a liner 40 for a storage area of a vehicle. The liner 40 includes two lateral fold lines, defined by integrally formed living hinges 42 and 42', which divide the liner 40 into rear 44, middle 46 and front 48 portions, or sections, respectively. Additionally, there is a set of, preferably two, side extensions 50a and 50b, which are separated from the rear 44 and middle 46 sections of the liner 40 by integrally formed living hinges 52. Each of the side extensions 50a and 50b include a living hinge 54, which is an extension of the living hinge 42, which further divides the extensions 50 into distinct portions. In this manner, the liner 40 has multiple living hinges so that the liner 40 can be manipulated into various positions.

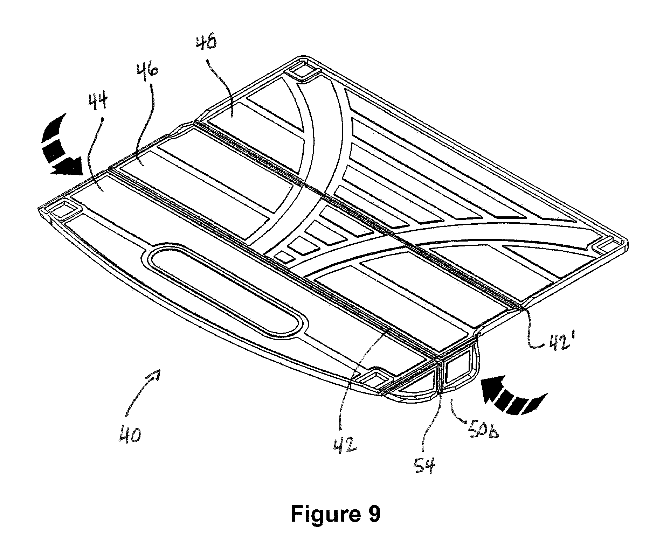

Figure 9 is a perspective view of the liner of Figure 8, with the two side extensions 50a and 50b folded down, for a vehicle having corresponding recesses in the area of these side extensions. The side extensions 50a and 50b, when folded along the living hinges 52, providing easy access to the recesses/storage compartments below the liner 40 without having to remove the liner from the storage area.

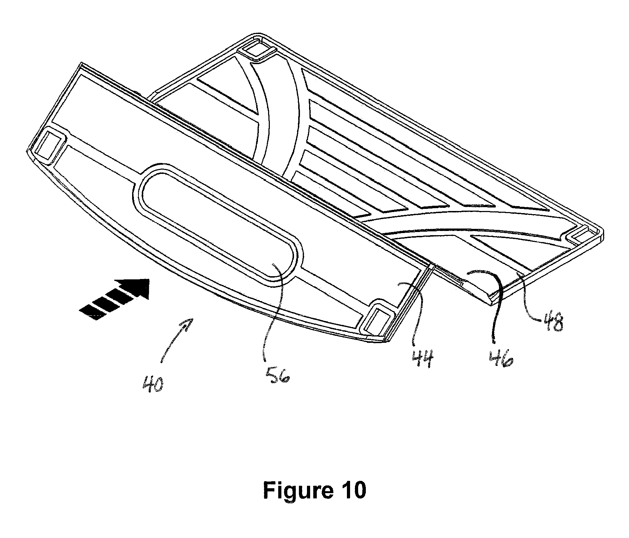

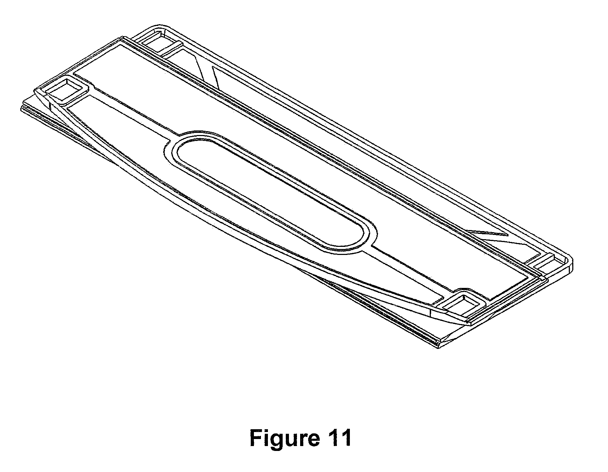

Figure 10 is a perspective view of an embodiment similar to the liner of Figure 8 without side extensions. In this figure, the liner 40 is partially folded. Although not shown, it will be understood that the liner 40 typically lies flat along the bottom of a vehicle storage area but can be folded up and placed in a storage position as shown in Figure 11 which allows for the liner to be stored within the vehicle storage area when not in use. The hinges 42 and 42' allow for the liner 40 to be collapsible so that storage space requirements of the liner 40 is minimized.

In an alternative embodiment, the liner 40 can include a layer of carpet on an opposite side (the side not shown). In this manner, the liner 40 can be flipped so that the entire storage area of the vehicle is carpet-lined, preferably in the same material as the storage area.

Alternatively, the front portion 48 of the liner 40 can be mounted to the vehicle storage area and the liner 40 folded to the position of Figure 11 so that it is not interfering with the vehicle storage area. The liner 40 also includes a handle 56 which allows the liner 40 to be portable or carried, if it is not mounted to the storage area.

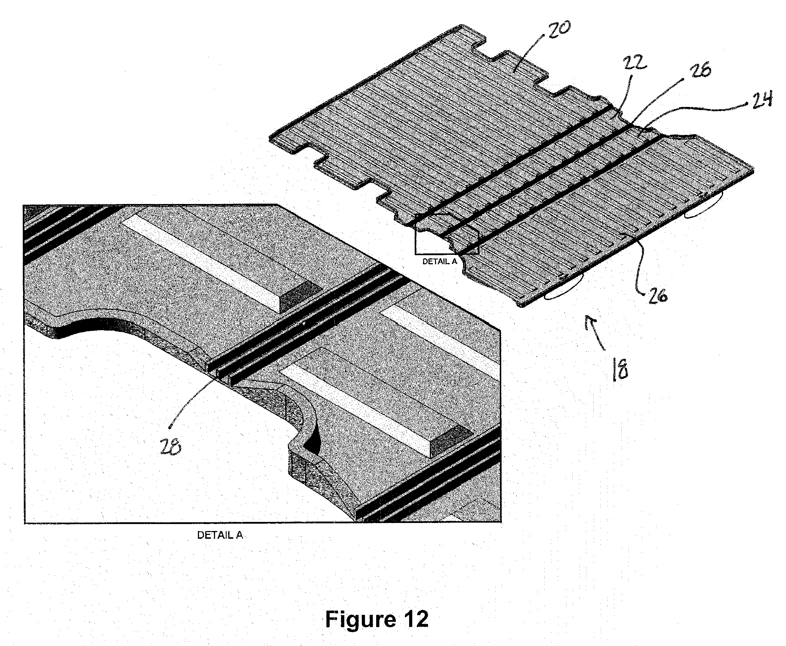

Turning to Figure 12, another embodiment of a living hinge is shown which can also be used with the liner of Figure 1 or any other liner.

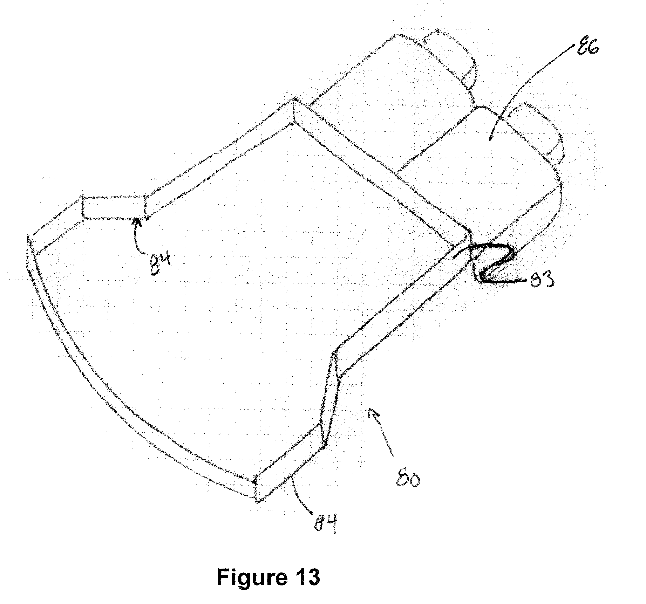

Turning to Figure 13, yet a further embodiment of a liner 80 is shown. The liner 80 comprises a central portion 82 having a plurality of side walls 83 surrounding the central portion 82 thereby providing a somewhat enclosed liner to provide water retention capabilities to the liner 80. The side walls 83 are attached to the central portion via living hinges 84. In the current embodiment, the side walls, the central portion and the hinges are manufactured from the same material. In order for the liner to maintain its shape, the side walls are preferably attached to the walls of the vehicle so that the living hinges are always bent, thereby providing the enclosed liner. When the rear seat, or seats, is(are) folded down, the liner 80 can be moved to a different location within the storage area and then remounted to the walls of the vehicle.

In a further embodiment, the liner can be used in a truck bed of a pick-up truck. A first portion of the liner is placed in the truck bed and while a second portion is mounted to the inside of the door to the truck bed. The first and second portions are connected together via a living hinge which is manufacture from the same material as the first and second portions. When the truck bed door is closed, the liner is folded along the living hinge and when the truck bed door is open, the liner lies flat along the truck bed and the open door.

In a further embodiment, the liner can include living hinges which are perpendicular to the rear seats thereby allowing the liner to be folded perpendicular to the rear seats. The direction of the living hinge is determined by the manufacture and can be in any direction.

In an alternative embodiment, the liner includes a plurality of living hinges which are designed to accommodate storage compartments within vehicles such as a load floor or other vehicle designs. In this manner, the liner can include any number of integrally formed living hinges to provide the necessary flexibility to access these storage compartments without having to remove the liner from the storage area.

Preferred and exemplary embodiments of this invention are described herein. Variations of those embodiments may become apparent to those of ordinary skill in the art upon reading the foregoing description. It is expected that skilled persons will employ such variations as appropriate, and it is expected that the invention may be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Without limiting the generality of the foregoing statement, some specific examples of possible variations may include the following, though others may be apparent to those knowledgeable in the field of the invention.

Further variations may be apparent or become apparent to those knowledgeable in the field of the invention, and are within the scope of the invention as defined by the claims which follow.

## Claims

1. A liner for a cargo area of a vehicle comprising:
a first portion;
a second portion, and
a living hinge, connecting the first portion and the second portion and in a same material as the first and second portions;
the living hinge allowing for the second portion to be folded with respect to the first portion.

2. The liner of Claim 1 wherein the second portion is mounted to a rear seat of the vehicle.

3. The liner of Claim 2 wherein when the rear seat is in an upright position, the liner is folded along the living hinge.

4. The liner of any preceding Claim wherein the material is a thermoplastic.

5. The liner of Claim 2 or any claim as it depends therefrom, further comprising intermediate portions, connecting the first and second portions, wherein the intermediate portions are connected to the first and second portions, and to each other, via intermediate living hinges, the intermediate portions and intermediate living hinges being of the same material as the first and second portions.

6. The liner of any preceding claim including side portions, connected to either the first or second portion via living hinges manufactured from the same material.

7. The liner of Claim 2 or any claim as it depends therefom, wherein the second portion is split longitudinally to accommodate individual rear seats.

8. The liner of any preceding claim further comprising a handle for carrying the liner.

9. The liner of any preceding claim further comprising a layer of carpet, mounted to the liner.

10. The liner of Claim 2 or any claim as it depends therefrom wherein the second portion is mounted to the rear seat via attachment apparatus.

11. The liner of Claim 10 wherein the attachment apparatus is Velcro, detachable grommets, push pin fasteners or bungee straps.

12. The liner of any preceding claim wherein the first portion is mounted to a floor of the cargo area.

13. A liner for a storage area of a vehicle comprising:
a central portion;
a set of side walls,
a set of living hinges, each living hinge connecting one of the side walls to the central portion, the set of living hinges made from a same material as the central portion and the side walls;
whereby when the set of side walls are folded along the living hinges, the liner defining an enclosed space for the storage area.

14. The liner of Claim 13 wherein the set of side walls are mounted to walls of the vehicle in order to maintain a shape of the enclosed space.

15. The liner of any of Claims 1 to 12 wherein the living hinge is integrally formed.

16. The liner of any of Claims 1 to 12 further comprising a plurality of portions connected to each other by a plurality of living hinges.

17. The liner of Claim 16 wherein any number of the plurality of living hinges are located within the liner to accommodate vehicle storage area compartments.
